# FASCICULE DE BREVET EUROPEEN

(11) **EP 1 404 137 B1**
(45) Date de publication et mention de la délivrance du brevet: **09.08.2006**
(21) Numéro de dépôt: 03103467.1
(22) Date de dépôt: 19.09.2003
(51) Int. Cl.: H04Q 7/20, H04L 12/28

(54) **Procédé et dispositif d'identification non sélective pour groupe de combat ou d'intervention**
Vorrichtung und Verfahren zur nicht-selektiven Identifizierung einer Kampf- oder Rettungsgruppe
Device and method for not selective identification for combat or emergency group

(30) Priorité: 24.09.2002 FR 0211790
(43) Date de publication de la demande: 31.03.2004
(73) Titulaire: Thales, 92526 Neuilly Sur Seine (FR)
(72) Inventeur: Hethuin, Serge, 94117, Arcueil (FR); Eumurian, Grégoire, 94117, Arcueil (FR)
(74) Mandataire: Lucas, Laurent Jacques

(56) Documents cités:
- EP-A- 0 653 643
- WO-A-02/21860
- WO-A-02/37770
- GB-A- 2 368 498
- US-A1- 2002 041 582
- FRODIGH M ET AL: "WIRELESS AD HOC NETWORKING-THE ART OF NETWORKING WITHOUT A NETWORK" ON - ERICSSON REVIEW, ERICSSON. STOCKHOLM, SE, vol. 77, no. 4, 2000, pages 248-263, XP000969933 ISSN: 0014-0171

## Description

La présente invention concerne notamment un procédé et un dispositif permettant une identification non sélective au sein d'un groupe de personnes.

Le groupe est par exemple formé de plusieurs personnes intervenant pour des secours, ou encore de combattants, le procédé utilisant notamment le réseau radio du groupe. Dans la présente application, l'expression « identification non sélective » correspond par exemple à une identification à l'aveugle d'intervenants du même groupe, masqués de celui qui interroge, soit à cause de la nuit ou de la pénombre, soit encore en raison d'interventions en milieu urbanisé (immeubles, parkings souterrains, ...).

Le système est destiné à être utilisé de nuit en milieu ouvert (Outdoor) ou encore en tout temps en milieu urbain (Indoor).

L'invention s'applique principalement à l'identification des membres d'une équipe d'intervention (fantassins, forces spéciales, équipes de maintenance dans des zones à risques, pompiers, médecins, ...) mais concerne également un plus large public comme les personnes ensevelies lors d'un tremblement de terre ou d'un séisme, etc.

Un groupe d'intervenants (sauveteurs, combattants, etc.) est muni en général d'un réseau de communication permettant d'échanger des services de phonie, de données et de vidéo temps réel avec les caractéristiques suivantes :
- Une portée typique de plus de 1200 m en espace dégagé.
- Une bande de fréquences quelconque entre 200 MHz et 2 GHz.
- Un protocole d'accès en TDMA ou CSMA.

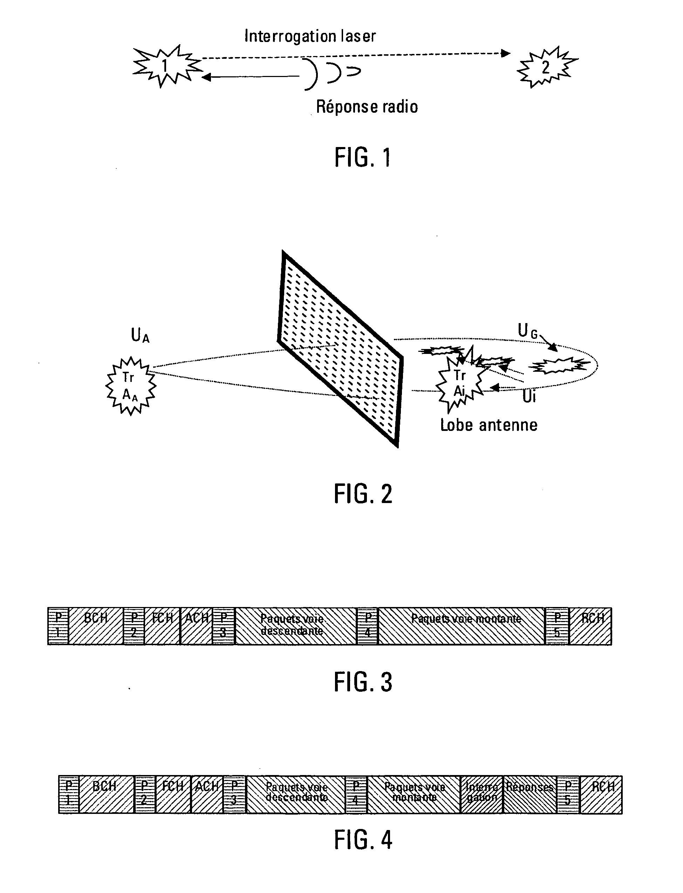

La technique d'identification selon l'art antérieur et illustrée à la figure 1 repose le plus généralement sur :
- Une interrogation transmise par faisceau laser, pour des raisons évidentes de pointage de l'intervenant à identifier,
- Une réponse émise sur voie radio spécifique si l'intervenant interrogé est un ami, dans le cas contraire il n'y a pas de réponse.

Cette technique ne permet pas d'interroger à travers les obstacles comme les murs.

Une autre technique d'identification, plus proche du domaine radar, consiste à émettre une onde électromagnétique et à capter l'énergie rétro diffusée. Pour discriminer les échos provenant des objets dépourvus d'intérêt et des personnes ou des biens à détecter, l'écho rétro diffusé peut être modulé par un motif particulier. Cette technique, si elle est accompagnée à la réception d'un dispositif à deux antennes et d'une formation des voies Somme et Différence, permet alors de détecter l'écart angulaire entre l'axe interrogateur-interrogé d'une part et l'axe de visée du système interrogateur d'autre part.

Cette technique ne tolère pas non plus d'interrogation à travers des obstacles en raison de l'atténuation rencontrée.

La demande de brevet WO 0237770 divulgue un réseau de communications comprenant plusieurs usagers échangeant des données sous forme de trame. La méthode d'identification décrite dans ce document ne traite pas le problème de la discrimination en aveugle, ni le problème de la localisation relative des usagers.

La demande de brevet US 2002/041582 décrit un procédé permettant de conserver et/ou rétablir des communications au sein d'un réseau à ressources planifiées.

L'idée de la présente invention est notamment de permettre la mise en oeuvre d'une fonction d'identification « non sélective » à partir du réseau radio de communication d'un groupe d'intervention sans nécessiter un équipement supplémentaire.

A cet effet, l'invention a pour objet, un dispositif d'interrogation radio à travers une antenne (omnidirectionnelle ou directive) sur l'individu interrogateur et un dispositif de répondeur radio selon une procédure d'anti-collision sur les individus situés dans le lobe de l'antenne d'interrogation.

L'originalité de ce système repose notamment sur l'utilisation d'une partie spécifique dans la trame de données du réseau radio du groupe d'intervention.

L'invention concerne un système d'identification non sélective dans un réseau de communication comprenant des usagers interrogateurs et des usagers non interrogateurs, les données étant échangées sous forme de trame caractérisé en ce que :
- au moins chaque usager comporte un processeur de données en charge de la gestion des services voix, données, vidéo,
- un usager maître ou chef de groupe est équipé d'un terminal radio, d'une
ou de plusieurs antennes directives et d'un processeur activé en mode maître,
- plusieurs usagers Ui sont équipés chacun d'un terminal radio, d'une ou de plusieurs antennes directives et d'un processeur disposé en mode esclave,
- une trame de données comprend un dispositif d'identification non sélective comportant au moins une première partie réservée à l'interrogation par l'un des usagers et une seconde partie permettant aux usagers concernés par la réponse de répondre,
- un usager est équipé de moyens adaptés à ajuster la puissance émise par un usager interrogateur,
- un usager est équipé de moyens adaptés à ajuster la puissance émise par un usager interrogateur,
- un dispositif de synchronisation d'un usager interrogateur par rapport au début de la phase d'interrogation de la trame.

Le système présentant les caractéristiques précitées est par exemple utilisé dans un réseau de communication où au moins une trame des données a un format TDMA, le dispositif d'identification non sélective étant disposé entre les paquets de la voie montante et le canal d'accès RCH.

L'invention concerne aussi un procédé d'identification non sélective dans un réseau de communication comportant plusieurs usagers, les données échangées se présentant sous la forme d'une trame, les services voix, données et vidéo étant gérés par un processeur pour chaque usager, caractérisé en ce qu'il comporte au moins les étapes suivantes :
- équiper les usagers d'un terminal radio et d'une antenne directive,
- désigner un usager chef de groupe,
- désigner au moins un usager interrogateur ou autorisé à interroger dans une ou plusieurs trames selon une direction donnée,
- synchroniser l'usager interrogateur par rapport au début de la phase d'interrogation dans la trame, la trame de données comportant au moins une première partie réservée à l'interrogation par un des usagers et une seconde partie permettant aux usagers concernés par la réponse, de répondre,
- utiliser un algorithme de tirage aléatoire ou pseudo-aléatoire pour calculer l'instant de réponse des usagers non interrogateurs dans la trame
ajuster progressivement lors du passage en phase d'interrogation, la puissance du terminal de l'usager qui interroge.

L'objet de l'invention présente notamment comme avantage d'utiliser les équipements existants.

Le procédé s'applique de plus quelque soit le type de protocole d'accès utilisé et quelque soit le type de forme d'onde mise en oeuvre.

Une telle identification est donc complémentaire à l'identification sélective qui consiste à chercher à identifier un intervenant (en général assez loin) que l'on voit soit à l'oeil nu ou soit à travers des senseurs dans le domaine visible ou encore en infrarouge. La réponse attendue dans ce dernier cas est ami ou inconnu. L'identification non sélective, à l'inverse, a pour but de faire savoir à celui qui interroge s'il est entouré dans les proches parages, d'intervenants du même groupe ou pas.

D'autres caractéristiques et avantages du dispositif selon l'invention apparaîtront mieux à la lecture de la description qui suit faite à titre illustratif et nullement limitatif en regard des dessins annexés qui représentent:
- La figure 1 un système d'interrogation-réponse selon l'art antérieur,
- La figure 2 un schéma du dispositif d'interrogation-réponse selon l'invention,
- La figure 3 un mode classique de partage temporel (TDMA) dans un réseau radio,
- La figure 4 un mode de partage temporel modifié permettant la mise en oeuvre du procédé selon l'invention,
- La figure 5 un graphe des temps représentant les signaux émis et reçus par l'interrogateur conformément au dispositif selon l'invention.

De façon à mieux faire comprendre l'objet de l'invention, la description qui suit donnée à titre illustratif et nullement limitatif concerne un dispositif d'interrogation radio tel que représenté à la figure 2.

Le système schématisé à la figure 2 comprend par exemple un réseau radio, plusieurs individus ou usagers Ui équipés chacun d'un terminal radio Tr et d'antennes Ai omni et/ou directives (du terminal radio), par exemple, ainsi qu'un processeur de données (non représenté sur la figure pour des raisons de simplification) ayant notamment pour fonction de gérer les différents services tels que la voix, les données, la vidéo, etc. à transmettre par la voie radio. Les moyens de communication radio, sur lequel peut s'appuyer l'identification NON sélective ou INS en abrégé, entre les membres du réseau peuvent être de différentes natures. L'équipement radio peut mettre en oeuvre à la fois une fonction de communications et à la fois une fonction d'identification.

Au niveau du groupe, un individu est désigné comme « chef de groupe » U_{G}, son processeur de données ainsi que sa radio travaillent alors en mode « maître ». Les autres usagers Ui du groupe sont équipés chacun d'un processeur de données et d'une radio travaillant dans le mode « esclave ». Le processeur de données du chef de groupe, décide automatiquement ou sous contrôle manuel si un individu qui demande à interroger est accepté ou non en tant « qu'individu interrogateur » U_{A}.

Selon une première variante de réalisation et afin de limiter la surface et le volume de la zone interrogée, le terminal radio de chaque usager est par exemple équipé d'une antenne directive Ad. Cette antenne est par exemple placée soit sur le torse au niveau de l'équipement vestimentaire de l'usager et solidaire de la direction du torse, soit sur le bras ou soit encore sur un boîtier avec poignée et dirigé dans la direction que l'on souhaite explorer.

### Réduction de puissance

Afin de limiter le nombre de réponses et les collisions dans la zone interrogée, le système « d'identification non sélective », INS, est par exemple pourvu d'un dispositif permettant une réduction de puissance. Ce dispositif équipe par exemple chacun des usagers du groupe. La réduction de puissance est effectuée par la radio du soldat interrogateur, sous contrôle de son processeur de données qui lui en demande ou non l'activation. La puissance nécessaire à l'interrogation est prédéfinie. Le passage à cette valeur de cette puissance est par exemple effectué au moment du passage en phase d'interrogation. Dans le cadre d'un fonctionnement normal, seul le terminal (radio) de l'usager qui interroge, réduit sa puissance au moment du passage en phase d'interrogation. Les terminaux des usagers qui doivent répondre, sont toutefois libre de réduire ou non leur puissance au moment de la réponse.

### Algorithme d'ajustement progressif de puissance

De manière à situer les amis ou les collaborateurs à l'intérieur de la zone interrogée, le processeur équipant un usager comporte par exemple un algorithme d'ajustement progressif de puissance. Ainsi, lors d'une trame, l'individu « interrogateur » peut interroger avec une puissance très réduite, augmenter cette puissance à la trame suivante et ainsi de suite pendant plusieurs trames.

### Trames utilisées

Le procédé selon l'invention est utilisé, par exemple, quelque soit le type de protocole d'accès utilisé et quelque soit le type de forme d'onde utilisée.

Par exemple, en mode d'accès CSMA/CA comme il est pratiqué dans les normes IEEE 802.11x (x=a, b, h, g, ...), la procédure d'accès consiste à essayer de transmettre le paquet dès son apparition et à différer cette transmission avec un délai variable et aléatoire si le média n'est pas libre à cet instant. Cette procédure est tout à fait praticable pour l'envoi de données mais peu compatible de transmission de signaux récurrents comme la voix ou la vidéo temps réel. Pour surmonter ce problème et faciliter la transmission de ces derniers, la norme permet de mettre en oeuvre une zone récurrente dans le temps, zone dans laquelle la procédure d'identification non sélective peut également être appliquée.

En mode TDMA, il est proposé de réserver une partie de la trame TDMA à la mise en place du dispositif d'identification non sélective comme décrit par la suite comprenant une partie destinée à la phase d'interrogation et une seconde partie à la phase de réponses.

Avant de détailler les étapes exécutées au cours du procédé selon l'invention, quelques éléments permettant une meilleure compréhension sont rappelés.

### Trame générique de type TDM dans un réseau radio

La figure 3 représente le schéma d'une trame dans un réseau à accès TDMA (Time Division Multiple Access). Dans un réseau à accès TDMA, les données sont transmises en général selon le cycle décrit sur cette figure 3.

### Préambules :

- P1 (avant l'émission en diffusion du terminal maître),
- P2 (avant l'allocation des ressources, secteur angulaire par secteur angulaire),
- P3 (avant les liaisons descendantes du maître vers les esclaves tour à tour),
- P4 (avant de passer en mode liaisons montantes),
- P5 (avant de démarrer la phase de réservation)

### Signalisation :

**BCH (Broadcasting CHannel) :** partie de diffusion de données servant à délivrer des informations communes à l'ensemble des usagers situés dans la portée radio de la station maître.
**FCH (Frame CHannel) :** partie envoyée par la station maître servant à indiquer les zones de transmission dans la trame courante allouées aux différents usagers pour recevoir ou transmettre des données.
**ACH (Acknowledge CHannel) :** partie servant à la station maître à indiquer à certains usagers désirant transmettre de l'information que leur requête est bien prise en compte et que la transmission sera allouée dans un très court délai.
**RCH (Random access CHannel) :** partie accessible aux usagers, désirant envoyer ou recevoir de l'information, leur permettant de déclarer leur demande auprès de la station maître.
**Données utiles (Data payload) :Echanges de la station maître vers les abonnés :** paquets de données de longueur définie envoyés individuellement par la station maître vers les différents usagers, tour à tour.
**Echanges des usagers vers la station maître ou vers d'autres usagers :** paquets de données de longueur définie envoyés par les usagers admis à émettre aux endroits alloués dans la trame par la station maître.

### Trame modifiée selon l'invention

La trame de la figure 3 est modifiée par exemple selon le schéma de la figure 4 en insérant un dispositif d'identification non sélective. Ce dispositif peut être inséré à tout endroit de la trame. L'exemple donné à titre illustratif représente un dispositif inséré entre les paquets de la voie montante et le RCH.

Le dispositif d'identification non sélective comporte par exemple :
- Une première partie réservée à l'interrogation par l'un des usagers, dénommé « usager interrogateur »,
- Une deuxième partie permet aux usagers, non interrogateurs mais concernés, de répondre.

Dans le cas d'un fonctionnement général, un seul usager à la fois est autorisé par le chef de groupe à interroger dans une trame. C'est par la partie d'accès RCH, comme pour les communications, que les usagers peuvent demander à émettre dans les trames suivantes une interrogation. L'usager autorisé à interroger dans une trame est prévenu, comme pour les allocations de communications, dans la partie FCH.

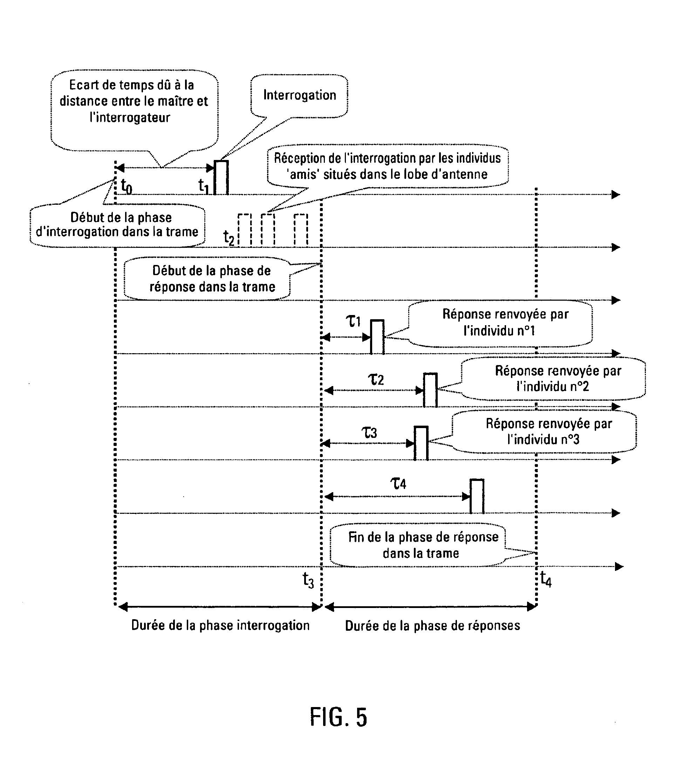

La figure 5 schématise un exemple de diagramme des échanges qui peuvent survenir dans une phase d'interrogation avec réponses.

Le chef de groupe autorise l'usager U_{A} à interroger dans une trame donnée. L'usager interrogateur U_{A} se synchronise par rapport au début de la phase d'interrogation dans la trame, instant t₀. L'écart entre t₀ et t₁ correspond à l'écart de temps dû à la distance entre l'usager maître U_{G} et l'interrogateur U_{A}. A partir de l'instant t₂, l'interrogation est reçue par les différents usagers Ui situés dans la périphérie de l'usager interrogateur U_{A}.

L'instant t₃ correspond au début de la phase réponse dans la trame comprenant les réponses des différents usagers Ui. Entre cet instant et l'instant t₄ de fin de phase de réponses, les usagers Ui concernés transmettent leur réponse à l'usager interrogateur avec respectivement des retards τ₁, τ₂, τ₃, τ₄ dépendant d'une part de leur position par rapport à l'usager interrogateur et d'un temps additionnel éventuel tiré de façon aléatoire dans certaines limites (voir paragraphe suivant).

Les informations d'identification « non sélective » sont par suite diffusées à l'ensemble des usagers du groupe.

Pour une portée du système de communications de 1500 m, la durée de la phase d'interrogation est supérieure à la somme du temps de transit (4.5 µs) plus la durée de l'interrogation elle-même. Par exemple, avec une modulation à 1 Mb/s et une interrogation composée de 3 octets, l'interrogation dure 24 µs et avec un temps de garde de 8 µs la zone d'interrogation est égale à 32 µs.

En ce qui concerne les réponses et pour éviter au maximum les collisions, les usagers qui reçoivent l'interrogation (et qui se doivent d'y répondre), utilisent par exemple un algorithme de tirage pseudo-aléatoire pour calculer l'instant d'envoi de la réponse dans la phase de réponses. Les instants de réponse peuvent s'étaler de 0 à un délai maximum, par exemple 192 µs par plots de durée égale à la durée de la réponse (soit 24 µs si sur 3 octets et en utilisant une modulation à 1 Mb/s). Au total, en ajoutant un temps de garde de 8 µs pour tenir compte du temps de transit de la réponse d'un usager situé en limite de portée de l'interrogateur, la durée de la phase de réponses est alors égale à environ 200 µs (8 slots temporels de 24 µs plus 8 µs). Cet algorithme est par exemple intégré au terminal radio équipant un usager en mode répondeur.

Le système de communications gère le passage du fonctionnement en communications usuelles avec antenne nominale d'une part et le fonctionnement avec antenne directive pour l'identification d'autre part. Pour cela, une commutation est effectuée au moment du passage en phase d'interrogation par le terminal radio de l'usager interrogateur. En fonctionnement normal, seul le terminal de l'usager interrogateur commute ses antennes, les autres usagers restent avec les antennes nominales (omnidirectionnelles en principe).

### Modes de fonctionnement

Plusieurs modes de fonctionnement peuvent être mis en oeuvre ; chacun de ceux-ci correspondant à des phases différentes de l'intervention. Les choix des modes s'effectuent partiellement en automatique et le reste en manuel par exemple, selon les conditions instantanées de l'environnement.

Ainsi, comme il est indiqué dans le tableau suivant, on fait successivement appel aux modes sans désignation, avec désignation, avec exclusion et enfin avec relayage.

| Mode | Interrogation | Réponse | Durée phase de réponse | Remarque |
|---|---|---|---|---|
| • Interrogation **Sans désignation** • Réponse Identité ami | 3 octets | 3 octets (24 µs) | 8 * 24 + 8 µs | 8 slots de tirage possibles |
| • Interrogation **Avec désignation** • Réponse position GPS + validité | 6 octets | 9 + 1 octets (80 µs) | 200 µs | Pas de collision à craindre |
| • Interrogation Avec désignation • Mesure de distance et de direction sur la réponse | 6 octets | 200 µs | 200 µs | Pas de collision à craindre |
| • Interrogation **Avec exclusion** • Réponse Identité ami | 6 octets | 3 octets (24 µs) | 8 * 24 + 8 µs | 8 slots de tirage possibles |
| • Interrogation Avec relais • Réponse Identité ami | 6 octets | 3 octets (24 µs) | 8 * 24 + 8 µs | 8 amis détectables |

### Mode Interrogation sans désignation

Dans ce mode, l'interrogation émise sur 3 octets (un octet de signalisation et 2 octets pour l'identité de l'interrogateur) implique une réponse de la part de tous les intervenants situés dans la zone de l'antenne de l'interrogateur recevant le signal d'interrogation.

La réponse, de chaque terminal d'un usager interrogé concerné, comporte 3 octets (un octet de signalisation et 2 octets pour l'identité de l'interrogé répondeur). La phase de réponse, de durée par exemple de 200 µs, permet d'avoir 8 slots temporels de 24 µs, autrement dit 8 slots de tirage pour les terminaux.

L'interrogation s'effectue par exemple sur plusieurs trames successives (un seul interrogateur pendant tout ce temps) de façon à déterminer l'ensemble des terminaux concernés et à éviter une non-détection suite à une collision lors d'une seule trame émise.

### Mode Interrogation avec désignation et réponse GPS

Dans ce mode, l'interrogation émise sur 6 octets (un octet de signalisation, 2 octets pour l'identité de l'interrogateur, 3 octets pour désigner le terminal interrogé) implique une réponse uniquement de la part du terminal de l'usager spécifié dans l'interrogation et à condition que celui-ci se situe dans la portée de l'antenne d'interrogation.

La réponse, du terminal de l'usager spécifié, comporte 10 octets (9 octets de positions GPS de l'interrogé et un octet de validité). La trame est émise une seule fois car il n'y a aucun risque de collision entre plusieurs terminaux.

### Mode Interrogation avec désignation et mesure de distance et de direction

Dans ce mode, l'interrogation émise sur 6 octets (un octet de signalisation, 2 octets pour l'identité de l'interrogateur, 3 octets pour désigner le terminal interrogé) implique une réponse uniquement de la part du terminal spécifié dans l'interrogation et à condition que celui-ci se situe dans la portée de l'antenne d'interrogation.

La réponse, du terminal spécifié, est un signal modulé, émis instantanément dès la réception de l'interrogation pour permettre au terminal interrogateur d'effectuer une mesure de distance et de direction. La trame est émise une seule fois car il n'y a aucun risque de collision entre plusieurs terminaux.

### Mode Interrogation avec exclusion

Dans ce mode, l'interrogation émise sur 6 octets (un octet de signalisation, 2 octets pour l'identité de l'interrogateur, 3 octets pour désigner le terminal exclus) implique une réponse de la part de tous les usagers, situés dans la zone de l'antenne de l'interrogateur recevant le signal d'interrogation excepté celui désigné dans l'interrogation.

La réponse, de chaque terminal interrogé concerné, comporte 3 octets (un octet de signalisation et 2 octets pour l'identité de l'interrogé répondeur). La phase de réponse, de durée par exemple de 200 µs, permet d'avoir 8 slots temporels de 24 µs, autrement dit 8 slots de tirage pour les terminaux.

L'interrogation s'effectue sur plusieurs trames successives (un seul interrogateur pendant tout ce temps) de façon à déterminer l'ensemble des terminaux concernés et à éviter une non-détection suite à une collision lors d'une seule trame émise.

### Mode Interrogation avec relais

Dans ce mode, l'interrogation émise sur 6 octets (un octet de signalisation, 2 octets pour l'identité de l'interrogateur, 3 octets pour désigner le terminal relais) est instantanément relayée par le terminal relais désigné et implique à son tour une réponse de la part de tous les intervenants situés dans la zone de l'antenne de l'interrogateur relais et recevant le signal d'interrogation de ce dernier.

La réponse, de chaque terminal interrogé concerné, comporte 3 octets (un octet de signalisation et 2 octets pour l'identité de l'interrogé répondeur). La phase de réponse, de durée par exemple de 200 µs, permet d'avoir 8 slots temporels de 24 µs, autrement dit 8 slots de tirage pour les terminaux. Les réponses obtenues sont transmises par le relais à l'interrogateur avec un retard de deux trames pendant la phase de réponse. On assiste alors à des séquences de 3 trames successives : la première pour signifier au noeud concerné la demande de relayage, la suivante pour l'interrogation par le noeud relais et l'obtention des réponses, la troisième servant au noeud relais pour transmettre les réponses à l'interrogateur de base.

### Mise en oeuvre des différents modes

La mise en oeuvre des différents modes de fonctionnement est par exemple exécutée par activation automatique du dispositif selon une chronologie prédéfinie. Chaque chronologie correspond à un scénario d'intervention prédéterminé et l'usager choisit par exemple le scénario qui lui convient soit avant la mission soit pendant la mission (le nombre de scénarios est très limité, quelques-uns tout au plus).

L'exemple qui suit permettra au lecteur de se faire une idée de l'enchaînement des opérations suite à une seule pression de l'individu sur la commande de déclenchement d'identification NON sélective (INS).

### Scénario 'Etat de la situation' :

### Activation de la commande INS :

- Phase 1 : Requête auprès du maître du groupe pour passer en INS Attente réponse positive (avec limitation de l'attente).
- Phase 2 : Acquisition de l'existence des partenaires dans les environs Déclenchement de l'option d'ajustement de la puissance émise 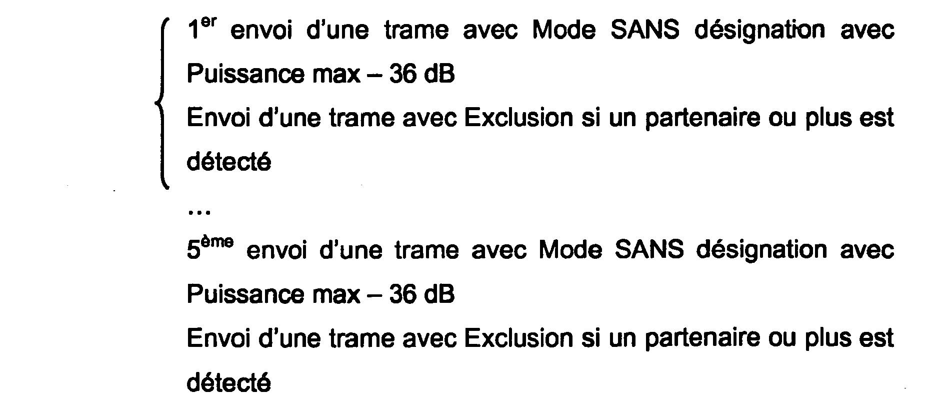 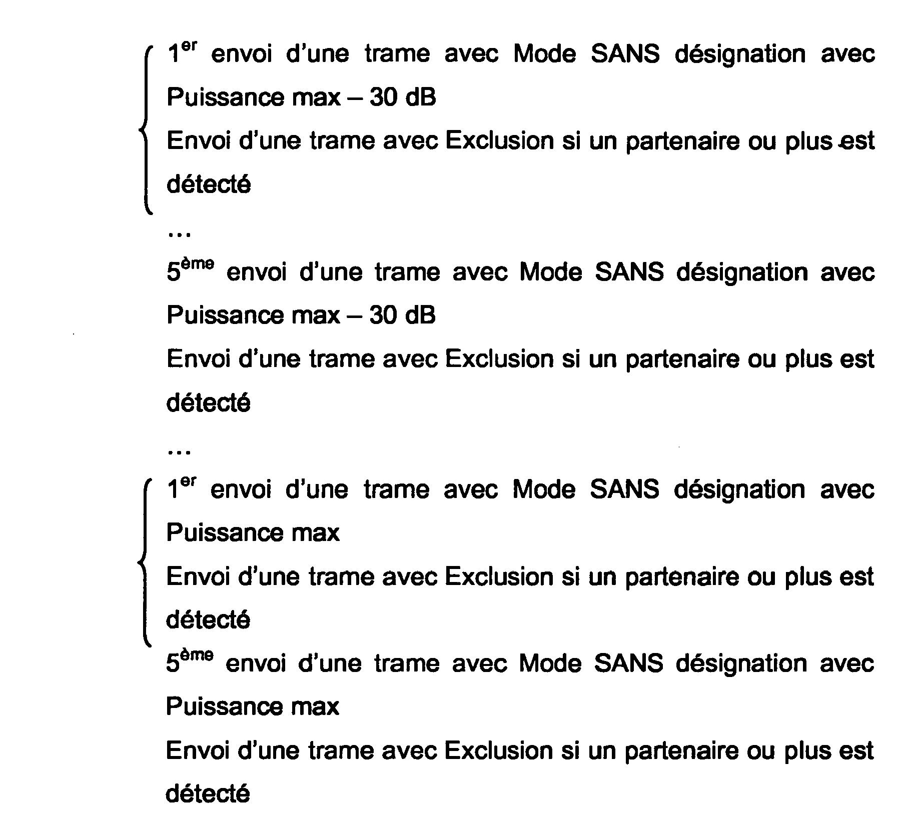
- Phase 3 : Visualisation de l'identité des partenaires identifiés
   Cette visualisation peut s'effectuer sur un module LCD clipsable au choix sur un bracelet de montre au poignet, sur un support fixé à l'arme ou encore à l'arrière de l'antenne directive fixée sur la veste de combat ou d'intervention.
- Phase 4 : Acquisition de la position GPS de chaque partenaire identifié ou de la distance avec chacun d'eux
   Envoi pour chacun des partenaires identifiés d'une trame avec Mode AVEC désignation (soit avec demande de position GPS en extérieur ou soit avec demande de mesure de distance en intérieur ou soit encore les deux) avec la puissance correspondant à celle qui a permis la détection
- Phase 5 : Visualisation de l'identité et de la position des partenaires identifiés
   Cette visualisation peut s'effectuer sur le même module LCD qu'auparavant.
   Cet ensemble de trames transmises ne dure qu'une centaine de ms.

### Utilisation des différentes antennes

Selon une variante de réalisation, chaque individu ou usager est par exemple équipé, pour des raisons de propagation, de plusieurs antennes. Les antennes sont par exemple réparties de la manière suivante : une antenne (directive) sur la poitrine, une autre (directive) dans le dos, une (directive) sur chaque épaule.
Il est alors possible de mettre en oeuvre les configurations suivantes sur l'usager interrogateur :
- Interrogation envoyée par l'ensemble des antennes
- Interrogation envoyée par l'antenne avant
- Interrogation envoyée par l'antenne arrière
- Interrogation envoyée par l'antenne épaule droite
- Interrogation envoyée par l'antenne épaule gauche
- Interrogation envoyée tour à tour trame après trame par chaque antenne l'une après l'autre

L'antenne avant, située sur la poitrine, peut être détachable et dirigée manuellement pour pointer dans des directions privilégiées. Le protocole d'accès dans le réseau de communication peut être quelconque. Le mécanisme de demande d'autorisation d'interrogation pour un usager s'insère dans le protocole de base de réservation.

## Revendications

1. Système d'identification non sélective dans un réseau de communication comprenant des usagers interrogateurs et des usagers non interrogateurs, les données étant échangées sous forme de trame **caractérisé en ce que** :
• au moins chaque usager comporte un processeur de données en charge de la gestion des services voix, données, vidéo,
• un usager maître ou chef de groupe est équipé d'un terminal radio, d'une ou de plusieurs antennes directives et d'un processeur activé en mode maître,
• plusieurs usagers Ui sont équipés chacun d'un terminal radio, d'une ou de plusieurs antennes directives et d'un processeur disposé en mode esclave,
• une trame de données comprend un dispositif d'identification non sélective comportant au moins une première partie réservée à l'interrogation par l'un des usagers et une seconde partie permettant aux usagers concernés par la réponse de répondre,
• le processeur d'un usager en mode esclave comporte un algorithme de tirage aléatoire ou pseudo-aléatoire,
• un usager est équipé de moyens adaptés à ajuster la puissance émise par un usager interrogateur,
• un dispositif de synchronisation d'un usager interrogateur par rapport au début de la phase d'interrogation de la trame.

2. Système selon la revendication 1 **caractérisé en ce que** le protocole d'accès radio dans le réseau de communication est quelconque.

3. Système selon l'une des revendications 1 à 2 **caractérisé en ce que** un usager est équipé d'une ou de plusieurs antennes directives positionnées soit sur le torse au niveau de l'équipement vestimentaire de l'usager et solidaire de la direction du torse, soit sur le bras, soit sur un boîtier avec poignée et dirigé dans la direction que l'on souhaite exposer.

4. Utilisation du système selon l'une des revendications 1 à 3 à un réseau de communication où au moins une trame des données à un format TDMA, le dispositif d'identification non sélective étant disposé entre les paquets de la voie montante et le canal d'accès RCH.

5. Procédé d'identification non sélective dans un réseau de communication comportant plusieurs usagers, les données échangées se présentant sous la forme d'une trame, les services voix, données et vidéo étant gérés par un processeur pour chaque usager, **caractérisé en ce qu'**il comporte au moins les étapes suivantes :
• équiper les usagers d'un terminal radio et d'une antenne directive,
• désigner un usager chef de groupe,
• désigner au moins un usager interrogateur ou autorisé à interroger dans une ou plusieurs trames selon une direction donnée,
• synchroniser l'usager interrogateur par rapport au début de la phase d'interrogation dans la trame, la trame de données comportant au moins une première partie réservée à l'interrogation par un des usagers et une seconde partie permettant aux usagers concernés par la réponse, de répondre,
• utiliser un algorithme de tirage aléatoire ou pseudo-aléatoire pour calculer l'instant de réponse des usagers non interrogateurs dans la trame,
• ajuster progressivement lors du passage en phase d'interrogation, la puissance du terminal de l'usager qui interroge.

6. Procédé selon la revendication 5 **caractérisé en ce que** le terminal de l'usager qui interroge réduit progressivement sa puissance.

7. Procédé selon la revendication 5 **caractérisé en ce qu'**il existe un mode Interrogation sans désignation dans lequel tous les usagers recevant le signal d'interrogation répondent à chaque trame du cycle d'interrogation du même usager interrogateur.

8. Procédé selon la revendication 5 **caractérisé en ce qu'**il existe un mode Interrogation sans désignation dans lequel tous les usagers recevant le signal d'interrogation répondent une fois en donnant leur identité et puis cessent de répondre dans le reste du cycle d'interrogation du même usager interrogateur.

9. Procédé selon la revendication 5 **caractérisé en ce qu'**il existe un mode Interrogation avec désignation dans lequel seul le terminal usager adressé répond s'il reçoit le signal d'interrogation et communique sa position GPS dans la réponse.

10. Procédé selon la revendication 5 **caractérisé en ce qu'**il existe un mode Interrogation avec désignation dans lequel seul le terminal usager adressé répond s'il reçoit le signal d'interrogation et envoie un signal prédéfini pour permettre à l'interrogateur de mesurer la distance qui les séparent et déterminer la direction dans laquelle il trouve le terminal adressé.

11. Procédé selon la revendication 5 **caractérisé en ce qu'**il existe un mode Interrogation avec exclusion dans lequel tous les usagers recevant le signal d'interrogation, excepté le terminal exclus, doivent répondre en donnant leur identité.

12. Procédé selon la revendication 5 **caractérisé en ce qu'**il existe un mode Interrogation avec relais dans lequel l'interrogation est transmise par un terminal relais, désigné dans le signal d'interrogation du terminal interrogateur, et dans lequel tous les usagers recevant le signal d'interrogation du terminal relais, doivent répondre.

## Claims

1. System for non-selective identification in a communications network comprising interrogating users and non-interrogating users, the data being exchanged in the form of a frame, **characterized in that**:
**·** at least each user has a data processor responsible for the management of the voice, data and video services,
• a user who is a master or group leader is equipped with a radio terminal, one or more directional antennae and a processor activated in master mode,
• several users Ui are each equipped with a radio terminal, one or more directional antennae and a processor placed in slave mode,
• a data frame comprises a non-selective identification device comprising at least one first part reserved for interrogation by one of the users and a second part enabling users affected by the response to respond,
**·** the user's processor in slave mode comprises a random or pseudo-random selection algorithm,
**·** a user is equipped with means adapted to adjusting the power sent out by an interrogating user,
• a device for synchronizing an interrogating user with respect to the start of the frame interrogation phase.

2. System according to Claim 1, **characterized in that** the radio access protocol in the communications network may be any protocol whatsoever.

3. System according to Claim 1 or 2, **characterized in that** a user is equipped with one or more directional antennae, positioned either on the torso on the user's clothing and integral with the direction of the torso, or on the arm or on a pack that has a handle and is pointed in the direction that is to be exposed.

4. Use of the system according to any one of Claims 1 to 3 in a communications network where at least one data frame has a TDMA format, the non-selective identification device being positioned between the packets of the uplink channel and the RCH access channel.

5. Method of non-selective identification in a communications network comprising several users, the exchanged data taking the form of a frame, the voice, data and video services being managed by a processor for each user, **characterized in that** the method comprises at least the following steps:
• equipping the users with a radio terminal and a directional antenna,
• designating a group leader user,
• designating at least one user who is an interrogator or is authorized to interrogate in one or more frames in a given direction,
• synchronizing the interrogating user with the start of the interrogation phase in the frame, the data frame comprising at least one first part reserved for interrogation by one of the users and a second part enabling users affected by the response to respond,
• making use of a random or pseudo-random selection algorithm to compute the instant of response from the non-interrogating users in the frame,
• progressively adjusting, on switching to the interrogation phase, the power of the terminal of the user which is interrogating.

6. Method according to Claim 5, **characterized in that** the terminal of the interrogating user reduces its power gradually.

7. Method according to Claim 5, **characterized in that** there is a mode of interrogation without designation in which all the users receiving the interrogation signal respond to each frame of the interrogation cycle of the same interrogating user.

8. Method according to Claim 5, **characterized in that** there is a mode of interrogation without designation in which all the users receiving the interrogation signal respond once by giving their identity and then stop responding in the rest of the interrogation cycle of the same interrogating user.

9. Method according to Claim 5, **characterized in that** there is a mode of interrogation with designation in which only the user terminal addressed responds if it receives the interrogation signal and communicates its GPS position in the response.

10. Method according to Claim 5, **characterized in that** there is a mode of interrogation with designation in which only the addressed user terminal responds if it receives the interrogation signal and sends a predefined signal to enable the interrogator to measure the distance between them and determine the direction in which the terminal addressed is located.

11. Method according to Claim 5, **characterized in that** there is an interrogation mode with exclusion in which all the users receiving the interrogation signal, except for the excluded terminal, must respond by giving their identity.

12. Method according to Claim 5, **characterized in that** there is an interrogation mode with relay in which the interrogation is transmitted by a relay terminal, designated in the interrogation signal of the interrogator terminal and in which all the users receiving the interrogation signal from the relay terminal must respond.

## Patentansprüche

1. System zur nicht-selektiven Identifikation in einem Kommunikationsnetzwerk, das abfragende Benutzer und nicht-abfragende Benutzer enthält, wobei die Daten in Form von Rahmen ausgetauscht werden, **dadurch gekennzeichnet, dass**:
• mindestens jeder Benutzer einen Datenprozessor aufweist, der mit der Verwaltung der Dienste Stimme, Daten, Video beauftragt ist,
• ein Master-Benutzer oder Gruppenleiter mit einem Funkterminal, einer oder mehreren Richtantennen und einem im Master-Modus aktivierten Prozessor ausgestattet ist,
• mehrere Benutzer Ui je mit einem Funkterminal, einer oder mehreren Richtantennen und einem im Sklaven-Modus angeordneten Prozessor ausgestattet sind,
• ein Datenrahmen eine nicht-selektive Identifikationsvorrichtung aufweist, die mindestens einen ersten Teil, der für die Abfrage durch einen der Benutzer reserviert ist, und einen zweiten Teil enthält, der es den von der Antwort betroffenen Benutzern ermöglicht, zu antworten,
• der Prozessor eines Benutzers im Sklaven-Modus einen zufälligen oder pseudo-zufälligen Losungsalgorithmus aufweist,
• ein Benutzer mit Mitteln ausgestattet ist, die ausgelegt sind, um die von einem Abfrage-Benutzer gesendete Leistung zu regeln,
• eine Synchronisationsvorrichtung eines abfragenden Benutzers bezüglich des Beginns der Abfragephase des Rahmens.

2. System nach Anspruch 1, **dadurch gekennzeichnet, dass** das Funkzugangsprotokoll in das Kommunikationsnetzwerk beliebig ist.

3. System nach einem der Ansprüche 1 bis 2, **dadurch gekennzeichnet, dass** ein Benutzer mit einer oder mehreren Richtantennen ausgestattet ist, die entweder auf dem Oberkörper in Höhe der Bekleidungsausrüstung des Benutzers und fest mit der Richtung des Oberkörpers verbunden, oder am Arm, oder an einem Gehäuse mit Griff und in die Richtung ausgerichtet positioniert sind, die man exponieren möchte.

4. Verwendung des Systems nach einem der Ansprüche 1 bis 3 für ein Kommunikationsnetzwerk oder mindestens einen Datenrahmen mit einem Format TDMA, wobei die nicht-selektive Identifikationsvorrichtung zwischen den Paketen des ansteigenden Wegs und dem Zugangskanal RCH angeordnet ist.

5. Verfahren zur nicht-selektiven Identifikation in einem Kommunikationsnetzwerk mit mehreren Benutzern, wobei die ausgetauschten Daten in Form eines Rahmens vorliegen, wobei die Dienste Stimme, Daten und Video für jeden Benutzer von einem Prozessor verwaltet werden, **dadurch gekennzeichnet, dass** es mindestens die folgenden Schritte aufweist:
• Ausstatten der Benutzer mit einem Funkterminal und einer Richtantenne,
• Bezeichnen eines Gruppenleiter-Benutzers,
• Bezeichnen mindestens eines abfragenden Benutzers oder eines Benutzers, der berechtigt ist, in einem oder mehreren Rahmen in einer gegebenen Richtung abzufragen,
• Synchronisieren des abfragenden Benutzers bezüglich des Beginns der Abfragephase im Rahmen, wobei der Datenrahmen mindestens einen ersten Teil, der für die Abfrage durch einen der Benutzer reserviert ist, und einen zweiten Teil aufweist, der es den durch die Antwort betroffenen Benutzern ermöglicht, zu antworten,
• Verwenden eines zufälligen oder pseudozufälligen Losungsalgorithmus, um den Antwortzeitpunkt der nicht-abfragenden Benutzer im Rahmen zu berechnen,
• progressives Anpassen der Leistung des Terminals des abfragenden Benutzers beim Übergang in die Abfragephase.

6. Verfahren nach Anspruch 5, **dadurch gekennzeichnet, dass** das Terminal des abfragenden Benutzers progressiv seine Leistung reduziert.

7. Verfahren nach Anspruch 5, **dadurch gekennzeichnet, dass** es einen Abfragemodus ohne Bezeichnung gibt, in dem alle das Abfragesignal empfangenden Benutzer auf jeden Rahmen des Abfragezyklus des gleichen abfragenden Benutzers antworten.

8. Verfahren nach Anspruch 5, **dadurch gekennzeichnet, dass** es einen Abfragemodus ohne Bezeichnung gibt, in dem alle das Abfragesignal empfangenden Benutzer einmal antworten, indem sie ihre Identität angeben, und dann für den Rest des Abfragezyklus des gleichen abfragenden Benutzers nicht mehr antworten.

9. Verfahren nach Anspruch 5, **dadurch gekennzeichnet, dass** es einen Abfragemodus mit Bezeichnung gibt, in dem nur das angesteuerte Benutzerterminal antwortet, wenn es das Abfragesignal empfängt, und seine GPS-Position in der Antwort mitteilt.

10. Verfahren nach Anspruch 5, **dadurch gekennzeichnet, dass** es einen Abfragemodus mit Bezeichnung gibt, in dem nur das angesteuerte Benutzerterminal antwortet, wenn es das Abfragesignal empfängt, und ein vordefiniertes Signal sendet, um es dem Abfrager zu ermöglichen, die sie trennende Entfernung zu messen und die Richtung zu bestimmen, in der er das angesteuerte Terminal findet.

11. Verfahren nach Anspruch 5, **dadurch gekennzeichnet, dass** es einen Abfragemodus mit Ausschluss gibt, in dem alle das Abfragesignal empfangenden Benutzer mit Ausnahme des ausgeschlossenen Terminals antworten müssen, indem sie ihre Identität angeben.

12. Verfahren nach Anspruch 5, **dadurch gekennzeichnet, dass** es einen Abfragemodus mit Relais gibt, bei dem die Abfrage durch ein Relaisterminal übertragen wird, das in dem Abfragesignal des abfragenden Terminals bezeichnet ist, und bei dem alle das Abfragesignal vom Relaisterminal empfangenden Benutzer antworten müssen.
